# EUROPEAN PATENT APPLICATION

(11) **EP 4 706 852 A1**
(43) Date of publication of application: **11.03.2026**
(21) Application number: 24198435.0
(22) Date of filing: 04.09.2024
(51) Int. Cl.: B23B 27/04, B23B 29/04

(54) **A CUTTING INSERT AND A CUTTING TOOL COMPRISING SUCH A CUTTING INSERT**

(71) Applicant: Seco Tools AB, 737 82 Fagersta (SE)
(72) Inventor: Thuresson, Jonas, Fagersta (SE); Hage, Björn, Fagersta (SE); Norgren, Magnus, Fagersta (SE); Karonen, Matti, Fagersta (SE); Forslund, Ted, Fagersta (SE)
(74) Representative: Sandvik

(57) **Abstract**

The invention is related to a cutting insert (100) comprising a bottom surface (104), wherein the bottom surface (104) comprises a rear sub-surface (116), a front sub-surface (120), and an intermediate sub-surface (122). The rear sub-surface (116) and the front sub-surface (120) are connected to each other via the intermediate sub-surface (122). The cutting insert (100) has a horizontal plane Q. The cutting insert (100) comprises at least one ridge (100) protruding from the rear sub-surface (116) a distance d₁ from the rear sub-surface (116) in a direction perpendicular to the rear sub-surface (116). The intermediate sub-surface (122) is connected to the rear sub-surface (116) via a first intersection (124), and the intermediate sub-surface (122) is connected to the front sub-surface (120) via a second intersection (126). The first intersection (124) is arranged at a distance d₂ from the horizontal plane Q, and the second intersection (126) is arranged at a distance d₃ from the horizontal plane Q, wherein d₃ - d₂ = d₁. The invention also relates to a cutting tool (300) comprising such a cutting insert (100).

## Description

### TECHNICAL FIELD

The present invention relates to a cutting insert and to a cutting tool comprising such a cutting insert.

### BACKGROUND

Within the cutting industry it is common to use a cutting tool comprising a toolholder with at least one replaceable cutting insert, mounted therein for performing a cutting process. In some cutting processes, e.g. grooving or parting, it is common to use a cutting tool comprising a toolholder with a cutting insert mounted therein, wherein the cutting insert is clamped in an insert pocket. Such a cutting tool is disclosed in e.g. EP 1 549 450 B1. This type of cutting tool provides a stable mounting of the cutting insert in the insert pocket. However, a problem with such cutting tools is that the cutting insert risks to break in the insert pocket due to impact of high cutting forces generated during operation of the cutting tool.

### SUMMARY OF THE INVENTION

It is an object of the present invention to reduce the risk of cutting insert breakage while maintaining a stable mounting of the cutting insert in the insert pocket.

The object of the present invention is achieved by means of cutting insert comprising:
- a top surface;
- a bottom surface;
- a front end surface connecting the top surface and the bottom surface;
- a rear end surface connecting the top surface and the bottom surface;
- a first side surface connecting the top surface and the bottom surface, and the front end surface and the rear end surface; and
- a second side surface connecting the top surface and the bottom surface, and the front end surface and the rear end surface, wherein

the cutting insert comprises a longitudinal axis A extending from the front end surface to the rear end surface, wherein
the cutting insert comprises a cutting edge arranged at an intersection between the front end surface and the top surface, wherein
a bisecting plane P, comprising the longitudinal axis A, bisects the cutting edge, and wherein
the cutting insert comprises a horizontal plane Q, comprising the longitudinal axis A, arranged perpendicular to the bisecting plane P, wherein
the bottom surface comprises a rear sub-surface, wherein
the cutting insert comprises at least one ridge protruding from the rear sub-surface away from the horizontal plane Q, wherein the at least one ridge extends in the direction of the longitudinal axis A, wherein the at least one ridge protrudes a distance d₁ from the rear sub-surface in a direction perpendicular to the rear sub-surface, wherein the bottom surface further comprises a front sub-surface and an intermediate sub-surface, wherein the rear sub-surface and the front sub-surface are connected to each other via the intermediate sub-surface, wherein the front sub-surface is connected to the front end surface, wherein the intermediate sub-surface is connected to the rear sub-surface via a first intersection, and wherein the intermediate sub-surface is connected to the front sub-surface via a second intersection, wherein the first intersection is arranged at a distance d₂ from the horizontal plane Q, and wherein the second intersection is arranged at a distance d₃ from the horizontal plane Q, wherein d₃ - d₂ = d₁.

With this configuration of the cutting insert, an additional amount of cutting insert material is provided beneath the cutting edge, where the cutting forces becomes the highest. A more rigid cutting insert is thereby achieved, resulting in a decreased risk of breakage during operation. By having a ridge protruding a distance d₁, corresponding to the difference between the distances d₃ and d₂, from the rear sub-surface, which is configured to mate with a corresponding pocket groove in the insert pocket, a stable mounting of the cutting insert in the insert pocket is achieved.

According to an embodiment, the cutting insert is a cubic boron nitride (CBN) cutting insert, a polycrystalline diamond (PCD) cutting insert, a cemented carbide cutting insert, a cermet cutting insert, or a ceramic cutting insert.

According to an embodiment, the cutting insert comprises a plurality of parallel and straight ridges protruding from the rear sub-surface, wherein the number of ridges is m, wherein m is an integer ≥ 2, and wherein each of the ridges are separated from each other via a straight rear surface groove being parallel to the ridges, wherein the number of rear surface grooves is n, wherein n = m-1.

By having a plurality of parallel and straight ridges protruding from the rear sub-surface, which are configured to mate with corresponding pocket grooves in the insert pocket, a more stable mounting of the cutting insert in the insert pocket is achieved. The risk of unintentional movement of the cutting insert in the insert pocket is thereby further decreased.

According to an embodiment, the front sub-surface comprises a front surface groove extending in the direction of the longitudinal axis A.

By having a front surface groove arranged in the front sub-surface, which is configured to mate with a corresponding pocket ridge in the insert pocket, a more stable mounting of the cutting insert in the insert pocket is achieved. The risk of unintentional movement of the cutting insert in the insert pocket is thereby further decreased.

According to an embodiment, the front surface groove is coaxial with one of the rear surface grooves.

By having the front surface groove being coaxial with one of the rear surface grooves, a more stable mounting of the cutting insert in the insert pocket is achieved. The risk of unintentional movement of the cutting insert in the insert pocket is thereby further decreased.

According to an embodiment, the front sub-surface comprises n parallel front surface grooves, and wherein each of the front surface grooves are coaxial with one of the rear surface grooves.

By having the front sub-surface comprising n parallel front surface grooves, wherein each of the front surface grooves are arranged coaxial with one of the rear surface grooves, a more stable mounting of the cutting insert in the insert pocket is achieved. The risk of unintentional movement of the cutting insert in the insert pocket is thereby further decreased.

According to an embodiment, the cutting insert comprises an intermediate groove extending through the intermediate sub-surface, wherein the intermediate groove is connected to the front surface groove and to the rear surface groove, wherein the intermediate groove is coaxial with the front surface groove and the rear surface groove to which it is connected.

By having an intermediate groove extending through the intermediate sub-surface, which is configured to mate with a corresponding pocket ridge in the insert pocket, a more stable mounting of the cutting insert in the insert pocket is achieved. The risk of unintentional movement of the cutting insert in the insert pocket is thereby further decreased.

According to an embodiment, the front sub-surface is parallel with the rear sub-surface.

By having the rear and front sub-surfaces being parallel to each other, a more stable mounting of the cutting insert in the insert pocket is achieved. The risk of unintentional movement of the cutting insert in the insert pocket is thereby further decreased.

According to an embodiment, the rear sub-surface is parallel with the horizontal plane Q.

By having the rear sub-surface being parallel with the horizontal plane Q, a more stable mounting of the cutting insert in the insert pocket is achieved. The risk of unintentional movement of the cutting insert in the insert pocket is thereby further decreased.

According to an embodiment, the bottom surface has mirror symmetry with respect to the bisecting plane P.

By having the bottom surface having mirror symmetry with respect to the bisecting plane P, a more stable mounting of the cutting insert in the insert pocket is achieved. The risk of unintentional movement of the cutting insert in the insert pocket is thereby further decreased.

According to an embodiment, the bisecting plane P intersects the front end surface at an intersection line B, and wherein the bisecting plane P intersects the rear end surface at an intersection line C, wherein the distance between the intersection line B and the intersection line C is L in the direction of the longitudinal axis A, as seen in a plane comprising the front sub-surface, wherein the second intersection is arranged at a distance x from the first intersection line B in the direction of the longitudinal axis A, as seen in a plane comprising the front sub-surface, wherein x/L = 0.10-0.30.

By having the relation x/L = 0.10-0.30, the risk of breakage of the cutting insert is reduced while a stable mounting of the cutting insert in the insert pocket is achieved. Having x/L being lower than 0.10, the risk of breakage of the cutting insert is increased due to the reduced amount of cutting insert material beneath the cutting edge. Having x/L being higher than 0.30, the mounting stability of the cutting insert in the insert pocket is reduced due to the reduced contact between the ridge and the corresponding pocket groove in the insert pocket.

According to an embodiment, the front sub-surface and the intermediate sub-surface are arranged at an angle α relative each other as seen in a plane parallel to the bisecting plane P, wherein α = 90°-135°.

By having α = 90°-135°, the risk of unintentional movement of the cutting insert in the insert pocket is reduced since the intermediate sub-surface act as a back-up support surface between the cutting insert and the insert pocket in case of a breakage of the ridge.

According to an embodiment, the cutting insert is a metal cutting insert.

According to an embodiment, the cutting insert is a turning insert.

According to an embodiment, the cutting insert is a grooving insert or a parting insert.

The object of the present invention is further achieved by means of a cutting tool comprising:
- a toolholder; and
- a cutting insert as described above, wherein

the toolholder comprising an insert pocket, wherein the cutting insert is securely arranged in the insert pocket, wherein
the insert pocket comprises a pocket bottom surface, wherein the pocket bottom surface comprises a pocket groove, wherein the ridge mates with the pocket groove.

The cutting tool is a cutting tool for performing a cutting operation. The cutting tool is especially beneficial in operations that exert side forces on the cutting insert due to the stable mounting of the cutting insert in the insert pocket.

According to an embodiment, the cutting tool is a metal cutting tool.

According to an embodiment, the cutting tool is a turning tool.

According to an embodiment, the cutting tool is a grooving tool or a parting tool.

According to an embodiment, the pocket bottom surface comprises m pocket grooves, wherein each of the ridges protruding from the rear sub-surface mates with a respective pocket groove.

According to an embodiment, the insert pocket comprises a pocket ridge protruding from the pocket bottom surface, wherein the front surface groove mates with the pocket ridge.

According to an embodiment, the insert pocket comprises n pocket ridges protruding from the pocket bottom surface, wherein each of the front surface grooves mates with a respective pocket ridge.

### BRIEF DESCRIPTION OF THE DRAWINGS

Figure 1 schematically illustrates a perspective view of a cutting insert according to an embodiment of the invention.
Figure 2 schematically illustrates a bottom view of the cutting insert illustrated in figure 1.
Figure 3 schematically illustrates a left side view of the cutting insert illustrated in figure 1.
Figure 4 schematically illustrates a right side view of the cutting insert illustrated in figure 1.
Figure 5 schematically illustrates a front view of the cutting insert illustrated in figure 1.
Figure 6 schematically illustrates a rear view of the cutting insert illustrated in figure 1.
Figure 7 schematically illustrates a cutting tool according to an embodiment of the invention.
Figure 8 schematically illustrates the insert pocket being part of the cutting tool illustrated in figure 7.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that the disclosure will be thorough and complete, and will fully convey the scope of the invention to those skilled in the art. Like reference numbers refer to like elements throughout. The elements illustrated in the drawings are not necessary according to scale. Some elements might have been enlarged in order to clearly illustrate those elements.

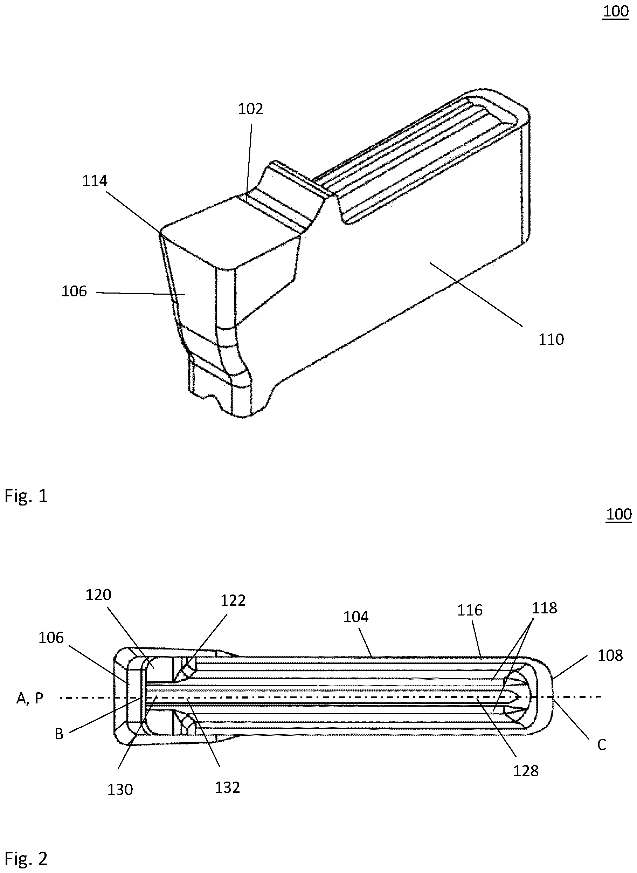

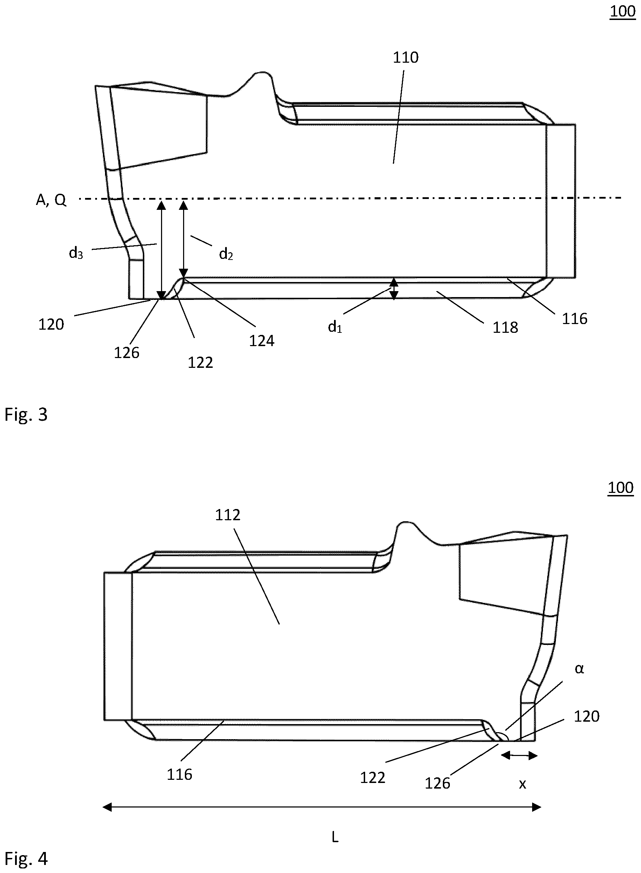

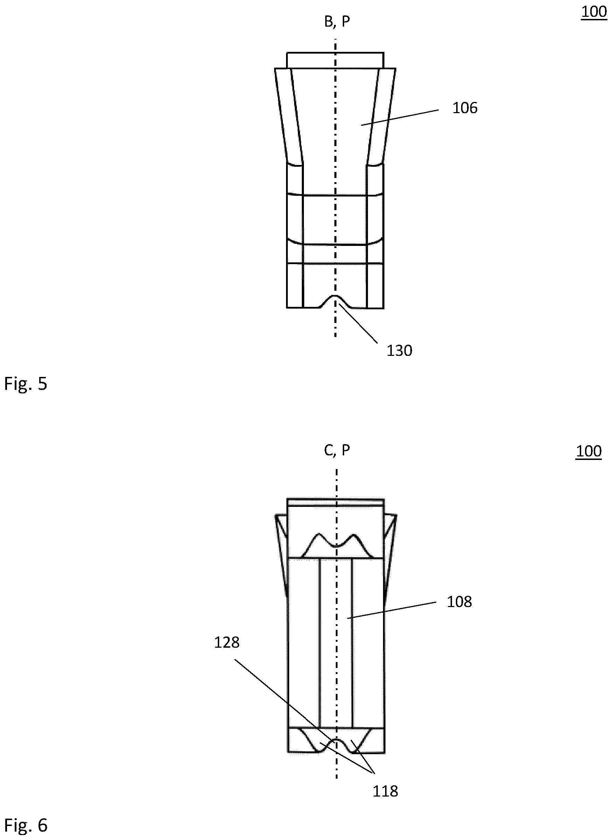

Figures 1-6 schematically illustrates a cutting insert (100) according to an embodiment of the invention. The cutting insert (100) comprises a top surface (102), a bottom surface (104), a front end surface (106) connecting the top surface (102) and the bottom surface (104), a rear end surface (108) connecting the top surface (102) and the bottom surface (104), a first side surface (110) connecting the top surface (102) and the bottom surface (104), and the front end surface (106) and the rear end surface (108), and a second side surface (112) connecting the top surface (102) and the bottom surface (104), and the front end surface (106) and the rear end surface (108). The cutting insert (100) comprises a longitudinal axis A extending from the front end surface (106) to the rear end surface (108). The cutting insert (100) further comprises a cutting edge (114) arranged at an intersection between the front end surface (106) and the top surface (102). A bisecting plane P, comprising the longitudinal axis A, bisects the cutting edge (114), and a horizontal plane Q, comprising the longitudinal axis A, is arranged perpendicular to the bisecting plane P. The bottom surface (104) comprises a rear sub-surface (116). Two parallel and straight ridges (118) protrude from the rear sub-surface (116), wherein the ridges (118) extend in the direction of the longitudinal axis A and protrude a distance d₁ from the rear sub-surface (116) in a direction perpendicular to the rear sub-surface (116). The bottom surface (104) further comprises a front sub-surface (120) and an intermediate sub-surface (122), wherein the rear sub-surface (116) and the front sub-surface (120) are connected to each other via the intermediate sub-surface (122). The front sub-surface (120) is connected to the front end surface (106). The intermediate sub-surface (122) is connected to the rear sub-surface (116) via a first intersection (124), and the intermediate sub-surface (122) is connected to the front sub-surface (120) via a second intersection (126). The first intersection (124) is arranged at a distance d₂ from the horizontal plane Q, and the second intersection (126) is arranged at a distance d₃ from the horizontal plane Q. The ridges (118) are separated from each other via a straight rear surface groove (128) being parallel to the ridges (118). The front sub-surface (120) comprises a front surface groove (130) extending in the direction of the longitudinal axis A, wherein the front surface groove (130) is coaxial with the rear surface groove (128). The cutting insert (100) further comprises an intermediate groove (132) extending through the intermediate sub-surface (122), wherein the intermediate groove (132) is connected to the front surface groove (130) and to the rear surface groove (128), wherein the intermediate groove (132) is coaxial with the front surface groove (130) and the rear surface groove (128). The front sub-surface (120) is parallel with the rear sub-surface (116) and the rear sub-surface (116) is parallel with the horizontal plane Q. The bottom surface (104) has mirror symmetry with respect to the bisecting plane P. The bisecting plane P intersects the front end surface (106) at an intersection line B, and the rear end surface (108) at an intersection line C, wherein the distance between the intersection line B and the intersection line C is L in the direction of the longitudinal axis A, as seen in a plane comprising the front sub-surface (120). The second intersection (126) is arranged at a distance x from the first intersection line B in the direction of the longitudinal axis A, as seen in a plane comprising the front sub-surface (120). The front sub-surface (120) and the intermediate sub-surface (122) are arranged at an angle α relative each other as seen in a plane parallel to the bisecting plane P.

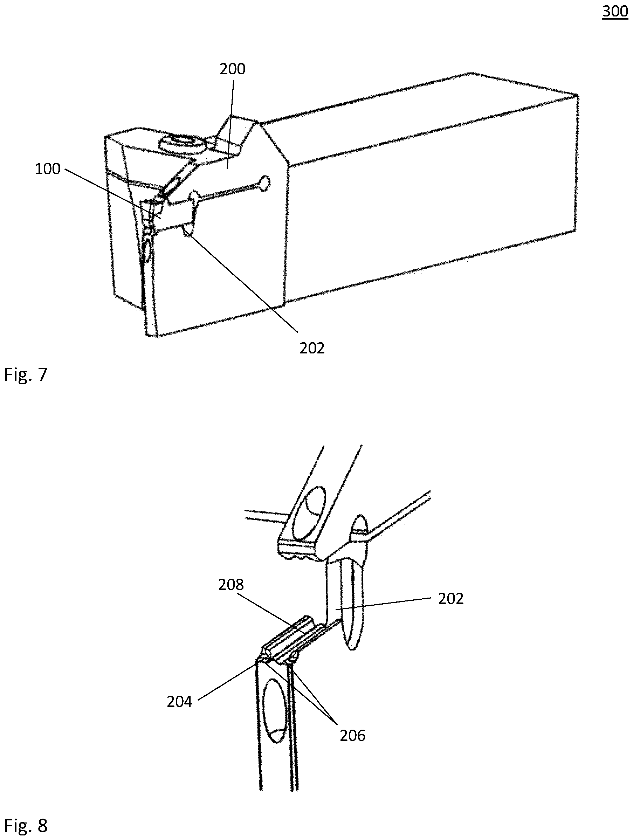

Figure 7 schematically illustrates a cutting tool (300) according to an embodiment of the invention. The cutting tool (300) comprises a toolholder (200) and the cutting insert (100) illustrated in figures 1-6. The toolholder (200) comprises an insert pocket (202), wherein the cutting insert (100) is securely arranged in the insert pocket (202).

Figure 8 schematically illustrates the insert pocket (202) being part of the cutting tool (300) illustrated in figure 7. The insert pocket (202) comprises a pocket bottom surface (204) comprising two pocket grooves (206) separated by a pocket ridge (208).

Referring again to figure 7. The ridges (118) protruding from the rear sub-surface (116) mates with the pocket grooves (206), and the rear surface grove (128), the front surface groove (130) and the intermediate groove (132) mates with the pocket ridge (208).

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each, and every problem sought to be solved by the presently described concept, for it to be encompassed hereby.

## Claims

1. A cutting insert (100) comprising:
- a top surface (102);
- a bottom surface (104);
- a front end surface (106) connecting the top surface (102) and the bottom surface (104);
- a rear end surface (108) connecting the top surface (102) and the bottom surface (104);
- a first side surface (110) connecting the top surface (102) and the bottom surface (104), and the front end surface (106) and the rear end surface (108); and
- a second side surface (112) connecting the top surface (102) and the bottom surface (104), and the front end surface (106) and the rear end surface (108), wherein
the cutting insert (100) comprises a longitudinal axis A extending from the front end surface (106) to the rear end surface (108), wherein
the cutting insert (100) comprises a cutting edge (114) arranged at an intersection between the front end surface (106) and the top surface (102), wherein
a bisecting plane P, comprising the longitudinal axis A, bisects the cutting edge (114), and wherein
the cutting insert (100) comprises a horizontal plane Q, comprising the longitudinal axis A, arranged perpendicular to the bisecting plane P, wherein
the bottom surface (104) comprises a rear sub-surface (116), wherein
the cutting insert (100) comprises at least one ridge (118) protruding from the rear sub-surface (116) away from the horizontal plane Q, wherein the at least one ridge (118) extends in the direction of the longitudinal axis A, wherein the at least one ridge (118) protrudes a distance d₁ from the rear sub-surface (116) in a direction perpendicular to the rear sub-surface (116),
**characterized in that**
the bottom surface (104) further comprises a front sub-surface (120) and an intermediate sub-surface (122), wherein the rear sub-surface (116) and the front sub-surface (120) are connected to each other via the intermediate sub-surface (122), wherein the front sub-surface (120) is connected to the front end surface (106), wherein the intermediate sub-surface (122) is connected to the rear sub-surface (116) via a first intersection (124), and wherein the intermediate sub-surface (122) is connected to the front sub-surface (120) via a second intersection (126), wherein the first intersection (124) is arranged at a distance d₂ from the horizontal plane Q, and wherein the second intersection (126) is arranged at a distance d₃ from the horizontal plane Q, wherein d₃ - d₂ = d₁.

2. The cutting insert (100) according to claim 1, wherein the cutting insert comprises a plurality of parallel and straight ridges (118) protruding from the rear sub-surface (116), wherein the number of ridges is m, wherein m is an integer ≥ 2, and wherein each of the ridges (118) are separated from each other via a straight rear surface groove (128) being parallel to the ridges (118), wherein the number of rear surface grooves (128) is n, wherein n = m-1.

3. The cutting insert (100) according to claim 1 or 2, wherein the front sub-surface (120) comprises a front surface groove (130) extending in the direction of the longitudinal axis A.

4. The cutting insert (100) according to claim 3, wherein the front surface groove (130) is coaxial with one of the rear surface grooves (128).

5. The cutting insert (100) according to claim 4, wherein the front sub-surface (120) comprises n parallel front surface grooves (130), and wherein each of the front surface grooves (130) are coaxial with one of the rear surface grooves (128).

6. The cutting insert (100) according to claim 4 or 5, wherein the cutting insert (100) comprises an intermediate groove (132) extending through the intermediate sub-surface (122), wherein the intermediate groove (132) is connected to the front surface groove (130) and to the rear surface groove (128), wherein the intermediate groove (132) is coaxial with the front surface groove (130) and the rear surface groove (128) to which it is connected.

7. The cutting insert (100) according to any of the preceding claims, wherein the front sub-surface (120) is parallel with the rear sub-surface (116).

8. The cutting insert (100) according to any of the preceding claims, wherein the rear sub-surface (116) is parallel with the horizontal plane Q.

9. The cutting insert (100) according to any of the preceding claims, wherein the bottom surface (104) has mirror symmetry with respect to the bisecting plane P.

10. The cutting insert (100) according to any of the preceding claims, wherein the bisecting plane P intersects the front end surface (106) at an intersection line B, and wherein the bisecting plane P intersects the rear end surface (108) at an intersection line C, wherein the distance between the intersection line B and the intersection line C is L in the direction of the longitudinal axis A, as seen in a plane comprising the front sub-surface (120), wherein the second intersection (126) is arranged at a distance x from the first intersection line B in the direction of the longitudinal axis A, as seen in a plane comprising the front sub-surface (120), wherein x/L = 0.10-0.30.

11. The cutting insert (100) according to any of the preceding claims, wherein the front sub-surface (120) and the intermediate sub-surface (122) are arranged at an angle α relative each other as seen in a plane parallel to the bisecting plane P, wherein α = 90°-135°.

12. The cutting insert (100) according to any of the preceding claims, wherein the cutting insert (100) is a turning insert.

13. The cutting insert (100) according to claim 12, wherein the cutting insert (100) is a grooving insert or a parting insert.

14. A cutting tool (300) comprising:
- a toolholder (200); and
- a cutting insert (100) according to any of claims 1-13, wherein
the toolholder (200) comprising an insert pocket (202), wherein the cutting insert (100) is securely arranged in the insert pocket (202), wherein
the insert pocket (202) comprises a pocket bottom surface (204), wherein the pocket bottom surface (204) comprises a pocket groove (206), wherein the ridge (118) mates with the pocket groove (206).

15. The cutting tool (300) according to claim 14, wherein the insert pocket (202) comprises a pocket ridge (208) protruding from the pocket bottom surface (204), wherein the front surface groove (130) mates with the pocket ridge (208).
